(19) 

Europäisches
Patentamt
European
Patent Office
Office européen
des brevets

(11) **EP 4 066 985 A1**

(12) **EUROPEAN PATENT APPLICATION**
published in accordance with Art. 153(4) EPC

(43) Date of publication:
**05.10.2022 Bulletin 2022/40**

(21) Application number: **20892161.9**

(22) Date of filing: **25.11.2020**

(51) International Patent Classification (IPC):
**B23K 35/30** $^{(2006.01)}$ **B23K 35/02** $^{(2006.01)}$

(86) International application number:
**PCT/KR2020/016750**

(87) International publication number:
**WO 2021/107580 (03.06.2021 Gazette 2021/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.11.2019 KR 20190157246**

(71) Applicant: **Esab Seah Corp.
Changwon-si, Gyeongsangnam-do 51553 (KR)**

(72) Inventors:
• **IM, Hee Dae**
 **Gimhae-si Gyeongsangnam-do 51002 (KR)**
• **KIL, Woong**
 **Gimhae-si Gyeongsangnam-do 51007 (KR)**
• **BAEK, Sung Hyun**
 **Changwon-si Gyeongsangnam-do 51415 (KR)**

(74) Representative: **Murgitroyd & Company
Murgitroyd House
165-169 Scotland Street
Glasgow G5 8PL (GB)**

(54) **NI-BASED ALLOY FLUX-CORED WIRE**

(57) The present invention relates to a Ni-based alloy flux-cored wire and, more particularly, to a Ni-based alloy flux-cored wire in which the contents of Mn and Nb are adjusted so that, from the wire, it is possible to obtain a weld metal having an excellent bead shape, good arc stability, spattering inhibition effect, good strength, good defect resistance, and good crack resistance. The Ni-based alloy flux-cored wire of the present invention has an effect of producing a weld metal having an excellent bead shape in multiple position welding of Ni-based alloy, 9% Ni steel, and high corrosion-resistance austenitic stainless steel, and an effect of producing a weld metal having good strength, defect resistance, and crack resistance.

[도1]

(a)

(b)
20 30 40 50 60 70 80 90 100 110 120 130 140

(c)
390 400 410 420 430 440 450 460 470 480 490 500 510 520 530 540

(d)
90 80 100 100 110 120 130 140 150 160 170 180 190 200 210 220

EP 4 066 985 A1

**Description**

**Technical Field**

The present invention relates to a Ni-based alloy flux-cored wire and, more particularly, a Ni-based alloy flux-cored wire in which the contents of Mn and Nb are adjusted so that, from the wire, it is possible to obtain a weld metal having good bead appearance, arc stability, spattering inhibition effect, excellent strength, defect resistance, and crack resistance.

**Background Art**

In the 20th century, super-heat-resistant alloys (called superalloys) have been widely used as basic structural materials in high-tech industries such as aerospace, nuclear power, power plants, and petrochemical industries. Among them, Ni-based alloy is a precipitation hardening alloy using the precipitation phenomenon of an austenite phase with a facecentered cubic lattice (FCC). It has the best performance among superalloys and is widely used as a structural material for many parts operating under high temperature and high stress conditions, such as blades, disks, and combustion chambers of gas turbines. It has good stiffness, strength, and toughness at high temperatures such as 980°C, and it is particularly resistant to oxidation and corrosion. It is also resistant to a phosphoric acid solution. Therefore, it is used for piping for facilities for chemical treatment and pollution prevention, and for offshore valve equipment.

A welding material containing a Ni-based alloy as a component is used for welding of a highly corrosion-resistant austenitic stainless steel or for welding of a Ni-based alloy used for structural members for chemical plants or petroleum-related equipment. Alternatively, a welding material containing a Ni-based alloy as a component is used for welding of 9% Ni steel or the like used for a structural member for storage tanks for LNG, liquid nitrogen, and liquid oxygen, and the like.

Among many Ni-based alloys, Inconel 625 alloy (Ni-Cr-Mo-Nb alloy) has excellent weldability. Some welding techniques such as gas tungsten arc welding (GTAW), shielded metal arc welding (SMAW), gas metal arc welding (GMAW), submerged arc welding (SAW), and flux-cored arc welding (FCAW) are frequently used with such an alloy.

The development of welding materials for FCAW has been delayed compared to other welding materials, and only recently, welding materials used for even a vertical-up welding position have been developed, and the frequency of use is gradually increasing. In recent years, in connection with special welding materials such as Ni-based alloys, the use of gas shielded arc welding using Ni-based alloy flux-cored wires capable of obtaining relatively high work efficiency compared to covered arc welding and TIG welding has been increasing.

However, in the case of gas shielded arc welding using a Ni-based alloy flux-cored wire, since the Ni-based alloy has a low melting point, gas is easily trapped at the interface between itself and the solidified slag, resulting in pits in the weld metal. In addition, there is a problem in that the content of manganese (Mn) must be limited to a very small amount as disclosed in Korean Patent No. 10-1708997 and Korean Patent No. 10-1760828 to prevent the slag peelability from being deteriorated.

**Disclosure**

**Technical Problem**

The objective of the present invention is to provide a Ni-based alloy flux-cored wire to solve the above problems.

**Technical Solution**

In order to accomplish the above objective, the present invention provides

a Ni-based alloy flux-cored wire having an Ni-based alloy sheath filled with flux, wherein a total composition including a sheath component and a flux component provided in the sheath includes, with respect to the total weight of the flux-cored wire,

0.1 wt% or less (except for 0 wt%) of C, 0.01 to 0.5 wt% of Si, 0.01 to 3.0 wt% of Mn, 15.0 to 22.0 w% of Cr, 0 to 2.9 wt% (except for 0 wt%) of Nb, 5.0 to 10.0 wt% of Mo, 3.0 to 9.0 wt% of Fe, and the balance including Ni and unavoidable impurities,

$SiO_2$ is included in an amount of 0.5 to 3.0%, at least one oxide selected from $Na_2O$, $K_2O$, MgO, and CaO is included in an amount of 0.1 to 3.0%, at least one of $Al_2O_3$, $TiO_2$, and $ZrO_2$ is included in an amount of 5.0 to 12.0 wt%, and

the Ni-based alloy flux-cored wire satisfies [Relational Expression 1] and [Relational Expression 2].

[Relational Equation 1]

$$0.1Na_2O+\{K_2O+0.5(MgO+Al_2O_3)\}/\{CaO+1.6(TiO_2+SiO_2)+0.2(ZrO_2)\} < 0.5$$

[Relational Equation 2]

$$0.01 \text{ wt\% of Mn} \le \text{Nb wt\%} \le (0.01 \text{ wt\% of Mn}) + 3.3$$

In addition, in order to accomplish the above objective, the present invention provides

a Ni-based alloy flux-cored wire having a Ni-based alloy sheath filled with flux, in which a deposited metal obtained from the flux-cored wire has a composition including
0.1 wt% or less (except for 0 wt%) of C, 0.01 to 0.5 wt% of Si, 0.01 to 3.0 wt% of Mn, 15.0 to 20.0 w% of Cr, 0 to 3.5 wt% (except for 0 wt%) of Nb, 5.0 to 15.0 wt% of Mo, 3.0 to 9.0 wt% of Fe, the balance of Ni, and unavoidable impurities, in which
the composition of the deposited metal satisfies [Relational Expression 3].

[Relational Equation 3]

$$[Fe+\{15(2.8Nb+0.85Mn)\}]/(Cr+Mo) < 7.0$$

**Advantageous Effects**

The Ni-based alloy flux-cored wire of the present invention can produce a weld metal having an excellent bead shape in full-fine welding of Ni-based alloy, 9% Ni steel, and high corrosion-resistance austenitic stainless steel, and can produce a weld metal having good strength, defect resistance, and crack resistance.

**Brief Description of Drawings**

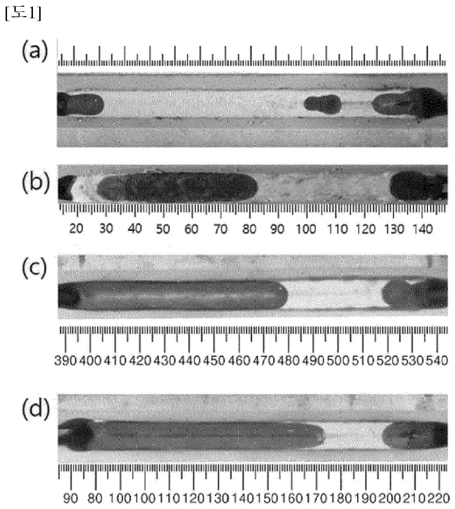

FIG. 1 is a photograph showing cracks of welding beads according to an exemplary composition of the present invention.

**Best Mode**

Hereinafter, the present invention will be described in detail.
In the present description, a flux-cored wire is a Ni-based alloy flux-cored wire in which a Ni-based alloy sheath is filled with flux.
In the present description, the term "weld metal" refers to a metal produced through solidification of a molten mixture of a deposited metal and a base metal during welding.
In the present description, the term "deposited metal" refers to a metal transferred from a filler metal (i.e., wire), which is a metal material added during welding, to a weld metal zone.
According to one aspect of the present invention, there is provided a flux-cored wire having a sheath having a sheath therein. The flux-cored wire is a Ni-based flux-cored wire in which Ni, Cr, Mn, and Ni are included in predetermined amounts represented by percentages by weight (wt%) with respect to the total weight of the wire.
More specifically, there is provided a Ni-based alloy flux-cored wire having a Ni-based alloy sheath having a flux therein, in which a total wire composition including a sheath component and a flux component provided in the sheath includes, with respect to the total amount of the entire flux-cored wire, 0.01 to 0.5 wt% of Si, 0.01 to 3.0 wt% of Mn, 15.0 to 22.0 wt% of Cr, 0 to 2.9 wt% (except for 0 wt%) of Nb, 5.0 to 10.0 wt% of Mo, 3.0 to 9.0 wt% of Fe, Ni as the balance, and unavoidable impurities. $SiO_2$ is included in an amount of 0.5 to 3.0 wt%, at least one oxide of $Na_2O$, $K_2O$, $MgO$, and $CaO$ is included in an amount of 0.1 to 3.0 wt%, and at least one oxide of $Al_2O_3$, $TiO_2$, and $ZrO_2$ is included in an amount of 5.0 ~ 12.0 wt%. The composition satisfies [Relational Expression 1] and {Relational Expression 2].

[Relational Equation 1]

$$0.1Na_2O+\{K_2O+0.5(MgO+Al_2O_3)\}/\{CaO+1.6(TiO_2+SiO_2)+0.2(ZrO_2)\} < 0.5$$

[Relational Equation 2]

$$0.01 \text{ wt\% of } Mn \leq Nb \text{ wt\%} \leq (0.01 \text{ wt\% of } Mn) + 3.3$$

The reason for limitation of the components of the flux-cored wire will be described below. Unless otherwise specified below, the content of each component in the composition is represented by "% by weight (wt%)". The content of each component includes the amount of the component initially contained in the alloy sheath and the amount of the component in the form of metal powder or alloy powder added from the flux.

Cr: 15 to 22 wt%

Chromium (Cr) is added for the purpose of improving the strength and corrosion resistance of the weld metal. When the content of Cr is less than 15 wt%, corrosion resistance deteriorates, and it is difficult to obtain a constant strength of the weld metal. On the other hand, Cr may combine with C to form carbide. When the content of Cr exceeds 22 wt%, chromium carbide may be excessively generated, resulting in deterioration in the toughness of the weld metal. Therefore, the content of Cr in the flux-cored wire is set to 15 to 22 wt% with respect to the total weight of the wire. More preferably, the content of Cr is 16 to 18 wt%.

Mo: 5 to 10 wt%

Molybdenum (Mo) is a component that combines with carbon (C) to form carbide and is a component that plays an advantageous role in improving abrasion resistance, hardness, and corrosion resistance. When the content of Mo is less than 5 wt%, it is difficult to obtain the above-described effects, whereas when the content of Mo exceeds 10 wt%, Mo is precipitated as a Laves phase, resulting in deterioration in crack resistance.
Therefore, in the present invention, it is preferable to limit the content of Mo to the range of 5 to 10 wt% based on the total weight of the wire. More preferably, the content of Cr is set to be in the range of 5 to 8 wt%.

C: 0.1 wt% or less (except for 0 wt%)

Carbon (C) has an effect of improving the strength of the weld metal, but there is a problem in that when it is added excessively, carbide is formed, and toughness is lowered. Therefore, the content of C is set to 0.1% or less based on the total weight of the wire. The lower limit of the content of C is not particularly limited. It is preferable that the content of C is in the range of 0.1 wt% or less to prevent deterioration of the toughness of the weld metal.

Mn: 0.01 to 3.0 wt%

Manganese (Mn) is added to improve the bead shape of the weld metal and to improve defect resistance and crack resistance. In the existing Ni-based flux-cored wire, the content of Mn was limited to prevent a sudden decrease in toughness. However, in the present invention, the content of Mn is increased to improve crack resistance but the content of Nb is limited to decrease toughness as described below.
Mn has an effect of detoxifying S as it combines with S, which reduces crack resistance by combining with Ni. Mn also has the effect of improving mechanical properties by promoting deoxidation in the weld zone. When the content of Mn is less than 0.01 wt%, it is difficult to obtain an effect of improving crack resistance and a sufficient deoxidant effect because Mn cannot sufficiently combine with S. Therefore, it is not preferable that the content range of Mn is less than 0.01 wt% . In addition, when the content of Mn exceeds 3.0 wt%, it is not preferable because the melting point of the slag melting is lowered due to the formation of Mno, resulting in deterioration in multiple position working performance and slag peelability. Therefore, the content of Mn is set to be in the range of 0.01 to 3.0 wt% based on the total weight of the wire. More preferably, Mn is included in an amount of 0.5 to 3.0 wt%.

Nb: 0 to 2.9 wt% or less (except for 0 wt%)

Niobium (Nb) may be added for the purpose of improving the strength of the weld metal. Niobium (Nb) may combine with carbon or nitrogen to form carbides, nitrides, or carbonitrides, thereby having a precipitation strengthening effect. However, when the content excessively increases, there is a problem in that it is precipitates as a Laves phase, resulting in a decrease in crack resistance.

Therefore, in the present invention, Nb is not added at all or the content of Nb is limited to 2.9 wt% or less. Preferably, Nb may be added in an amount of 2 wt% or less, and more preferably 0.5 wt% or less. It is characterized in that workability and physical properties can be secured by adjusting the content of Mn while limiting the content of Nb.

Fe: 3.0 to 9.0 wt%

Iron (Fe) is an indispensable element in a welding material or in a base material in production of Ni-based alloy, and it is a component to obtain the ductility of a metal. When the content of Fe is less than 3.0 wt%, the required ductility of the weld metal cannot be obtained, whereas when the content of Fe exceeds 9.0 wt%, the high-temperature cracking resistance is deteriorated. Therefore, in the present invention, it is preferable to limit the content of Fe to the range of 3.0 to 9.0 wt% based on the total weight of the wire. In addition, when Cu is included, since Fe forms a compound with Cu (copper) and causes cracks, it is preferable to control the content of Cu as well as the content of Cu.

Si: 0.01 to 0.5 wt%

Silicon (Si) is a component that improves deoxidation action and weldability. When the content of Si is less than 0.01 wt%, the deoxidation effect is insufficient. When the content of Si exceeds 0.5 wt%, it is not desirable because the crack susceptibility increases due to the generation of the Laves phase. Therefore, the content of Si is preferably limited to the range of 0.01 to 0.5 wt%.

P + S: 0.01 wt% or less (except for 0 wt%)

Phosphorus (P) and sulfur (S) are elements that affect high-temperature cracking. P and S may form compounds having low melting points, thereby causing high-temperature cracking. In the case of the present invention, P or S may be contained, and the total content of P and S is preferably less than 0.01 wt%.

The remaining component of the present invention is nickel (Ni) .

Ni stabilizes the austenite structure and combines with Nb to form precipitates, thereby increasing tensile strength. Preferably, the content of Ni may be limited to the range of 45 to 60 wt%. When the content of Ni is less than 40 wt%, since the contents of other elements are increased, the structure may become unstable, and toughness may deteriorate. When the content of Ni exceeds 60 wt%, since the amount of Cr, Mo, etc. is relatively low, corrosion resistance or strength may be deteriorated. Therefore, the content of Ni in the flux-cored wire is set to be in the range of 45 to 60 wt% with respect to the total weight of the wire. More preferably, the content of Ni may be in the range of 50 to 60 wt%.

$SiO_2$ : 0.5 ~ 3.0 wt%

$SiO_2$ is a slag forming agent and serves to increase the flowability and spreadability of the weld bead. For this effect, $SiO_2$ is preferably added in an amount of 0.5 wt% or more. In addition, When the content of $SiO_2$ exceeds 3.0 wt%, the Si content in the weld metal increases, resulting in a decrease in crack resistance. Therefore, it is preferable to limit the content of $SiO_2$ to the range of 0.5 to 3.0 wt%.

One or more oxides selected from $Na_2O$ and $K_2O$: 0.1 to 3.0 wt%

An alkali metal oxide should be added in an amount of 0.1 wt% or more to reduce the ionization potential of the arc during welding to facilitate arc generation and to maintain a stable arc during welding. In addition, when the content of an alkali metal oxide exceeds 3.0 wt%, welding fume may be excessively generated due to high vapor pressure. Therefore, it is preferable to limit the content of the alkali metal oxide to 0.1 to 3.0 wt%. The alkali metal oxide may include either one or both of $Na_2O$ and $K_2O$.

One or more oxides selected from $SiO_2$, $TiO_2$, and $ZrO_2$: 5.0 to 12.0 wt%

Al, Ti, and Zr oxides may be added to increase the melting point of the slag to improve the workability of multi-position welding. When the sum of the contents of Si, Ti, and Zr oxides is less than 5.0 wt%, the amount of slag is not sufficient, and thus the slag covering is deteriorated. When it exceeds 12.0 wt%, slag winding defects may occur. Therefore, it is desirable to limit the total content of the Si, Ti, Zr oxides to the range of 5.0 to 12.0 wt%.

The flux-cored wire of the present invention may further include titanium (Ti) in an amount of 0.2 wt% or less. Ti can increase the strength due to the precipitation hardening effect in the Ni-based alloy and reduce the pore generation by acting as a deoxidation component. When the content of Ti exceeds 0.2 wt%, it is undesirable because the low-temperature impact toughness and crack resistance of the weld zone occur due to excessive precipitation.

On the other hand, in the flux-cored wire of the present invention, it is preferable to control the content of each oxide so as to satisfy [Relational Expression 1] given below. Specifically, the control is preferably performed such that the value defined by [Relational Expression 1] is less than 0.5. When the value is 0.5 or more, the quality of the weld metal zone may be deteriorated due to deterioration of weldability and cracking characteristics.

[Relational Equation 1]

$$0.1Na_2O + \{K_2O + 0.5(MgO + Al_2O_3)\} / \{CaO + 1.6(TiO_2 + SiO_2) + 0.2(ZrO_2)\} < 0.5$$

In addition, in the present invention, it is preferable to control the content of Mn and Nb to satisfy [Relational Expression 2]. In the case of a chemical composition that does not satisfy [Relational Expression 2], it is difficult to secure good physical properties of the weld metal zone because harmful phases occur depending on the content of Mn and Nb.

[Relational Equation 2] $0.01$ wt% of Mn $\leq$ Nb wt% $\leq$ ($0.01$ wt% of Mn) + $3.3$

The flux component of the flux-cored wire according to the present invention may further contain 0.1 wt% or less of MnO and 0.1 to 1.5 wt% of a fluorine compound in terms of F. In addition to the above-mentioned components, unintended impurities from raw materials or the surrounding environment may inevitably be incorporated in the normal manufacturing process.

According to another aspect of the present invention, in the Ni-based alloy flux-cored wire in which the Ni-based alloy sheath is filled with flux, the deposited metal obtained from the flux-cored wire comprises 0.1 wt% or less (except for 0 wt%) of C, 0.01 to 0.5 wt% of Si, 0.01 to 3.0 wt% of Mn, 15.0 to 22.0 w% of Cr, 0 to 2.9 wt% (except for 0 wt%) of Nb, 5.0 to 10.0 wt% of Mo, 3.0 to 9.0 wt% of Fe, and the balance including Ni and unavoidable impurities, in which the composition of the deposited metal satisfies [Relational Equation 3]

[Relational Equation 3] is $[Fe + \{15(2.8Nb + 0.85Mn)\}] / (Cr + Mo) < 7.0$.

According to the composition of the flux-cored wire alloy according to the present invention, multiple position welding is possible, and a weld metal having excellent strength and toughness can be obtained. The content of each component includes the amount of the component initially contained in the alloy sheath and the amount of the component in the form of metal powder or alloy powder added from the flux.

The content of Cr of the deposited metal obtained from the flux-cored wire according to the present invention may be 15 to 20 wt%. Chromium (Cr) is added for the purpose of improving the strength and corrosion resistance of the weld metal. When the content of Cr is less than 15 wt%, corrosion resistance deteriorates, and it is difficult to obtain a constant strength of the weld metal. On the other hand, Cr may combine with C to form carbide. When the content of Cr exceeds 20 wt%, the toughness of the weld metal is deteriorated, and the growth is inhibited.

The content of Mo may be in the range of 5 to 15 wt%. Molybdenum (Mo) is a component that combines with carbon (C) to form carbide and is a component that plays an advantageous role in improving abrasion resistance, hardness, and corrosion resistance. When the content of Mo is less than 5 wt%, it is difficult to obtain the above-described effects, whereas when the content of Mo exceeds 15 wt%, Mo is precipitated, thereby deteriorating crack resistance. More preferably, the content of Mo may be in the range of 5 to 8 wt%.

The content of C may be 0.1 wt% or less. Carbon (C) has an effect of improving the strength of the weld metal, but there is a problem in that when it is added excessively, carbide is formed, and toughness is lowered. More preferably, the content of C may be set to 0.1 wt% or less to prevent deterioration of the toughness of the weld metal.

The content of Mn may be in the range of 0.01 to 3.0 wt%. Manganese (Mn) is added to improve the bead shape of the weld metal and to improve defect resistance and crack resistance. The present invention improves crack resistance by increasing the content of Mn and prevents toughness deterioration by limiting the content of Nb as described below. In the present invention, when the content of Mn is less than 0.01 wt%, the effect of improving crack resistance cannot be obtained because the bonding with S is not sufficient, and a sufficient deoxidation effect cannot be obtained. Therefore, it is not preferable that the content of Mn is less than 0.01 wt%. Moreover, when the content of Mn exceeds 3.0 wt%, the peelability will be lowered. Therefore, it is unpreferable that the content of Mn exceeds 3.0 wt%. More preferably, the content of Mn is in the range of 0.5 to 3.0 wt%.

The content of Nb may be in the range of 0 to 3.5 wt% (except for 0 wt%). Niobium (Nb) may be added for the purpose of improving the strength of the weld metal. Niobium (Nb) may combine with carbon or nitrogen to form carbides, nitrides, or carbonitrides, thereby having a precipitation strengthening effect. However, when the content excessively increases, there is a problem in that crack resistance is deteriorated. Therefore, in the present invention, Nb is not added at all or the content of Nb is limited to 3.5 wt% or less. Preferably, Nb may be added in an amount of 2.9 wt% or less, and more preferably 2.0 wt% or less. The present invention features that the content of Nb is limited and the content of Mn is adjusted to a suitable range, to secure a certain degree of strength.

The content of Fe may be in the range of 3.0 to 9.0 wt%. Fe is an element that is indispensable in a welding material or a base material in a Ni-based alloy. Iron (Fe) is an element essential in a welding material or a base material in a Ni-based alloy and is a component that secures the ductility of the metal. When the content of Fe is less than 3.0 wt%, the required ductility of the weld metal cannot be obtained, whereas when the content of Fe exceeds 9.0 wt%, the high-temperature cracking resistance is deteriorated. Therefore, these Fe content ranges are not preferable. Therefore, in the present invention, it is preferable to limit the content of Fe to the range of 3.0 to 9.0 wt% based on the total weight of the wire. In addition, when Cu is additionally included, since Fe forms a compound with Cu (copper) and causes cracks, it is preferable to control the content of Fe as well as the content of Cu.

The content of Si may be in the range of 0.01 to 0.5 wt%. When the content of Si is less than 0.01 wt%, the deoxidation effect is insufficient. When the content of Si exceeds 0.5 wt%, it is not desirable because the crack susceptibility increases due to the generation of the Laves phase. Therefore, the content of Si is preferably limited to 0.5 wt% or less.

In addition, titanium (Ti) may be included in an amount of 0.2 wt% or less. Ti can increase the strength due to the precipitation hardening effect in the Ni-based alloy and reduces the pore generation by acting as a deoxidation component. When the content of Ti exceeds 0.2 wt%, it is undesirable because the low-temperature impact toughness and crack resistance of the weld zone occur due to excessive precipitation.

The balance may be Ni and unavoidable impurities.

On the other hand, it is preferable that the components of the deposited metal obtained from the Ni-based alloy flux-cored wire of the present invention satisfy [Relational Expression 3] given below.

$$[\text{Relational Equation 3}] \quad [Fe+\{15(2.8Nb+0.85Mn)\}]/(Cr+Mo) < 7.0.$$

Specifically, the composition of the weld metal is preferably determined such that the value defined by [Relational Expression 3] is less than 7.0. When the value is 7.0 or greater, it is difficult to secure excellent weld quality due to deterioration of weldability and crack resistance.

The Ni-based alloy flux-cored wire according to the present invention does not contain tungsten (W) but contains chromium (Cr) and manganese (Mn) in large amounts and niobium (Nb) in a predetermined limited amount, to improve slag peelability and crack resistance and obtain desired physical properties such as strength.

Hereinafter, the present invention will be described in more detail with reference to examples, but the present invention is not limited by the examples.

Flux-cored wires including the components shown in Table 1 were prepared. Each component example will be described.

[Table 1]

| | C | Si | Mn | Nb | Cr | Mo | Fe | P+S | Ti | Expression 1 | Expression 2 | Expression 3 |
|---|---|---|---|---|---|---|---|---|---|---|---|---|
| 1 | 0.01 | 0.05 | 0.55 | 2.85 | 16.90 | 6.97 | 8.33 | 0.008 | 0.000 | 0.04 | O | 5.65 |
| 2 | 0.01 | 0.05 | 1.22 | 2.81 | 16.93 | 6.92 | 8.36 | 0.008 | 0.000 | 0.04 | O | 5.95 |
| 3 | 0.01 | 0.05 | 1.42 | 2.82 | 16.95 | 6.87 | 8.25 | 0.008 | 0.000 | 0.04 | O | 6.08 |
| 4 | 0.01 | 0.05 | 1.96 | 2.83 | 16.81 | 7.01 | 8.31 | 0.008 | 0.000 | 0.04 | O | 6.38 |
| 5 | 0.01 | 0.05 | 2.17 | 2.80 | 16.94 | 6.88 | 8.29 | 0.008 | 0.000 | 0.04 | O | 6.45 |

(continued)

|  | C | Si | Mn | Nb | Cr | Mo | Fe | P+S | Ti | Expression 1 | Expression 2 | Expression 3 |
|---|---|---|---|---|---|---|---|---|---|---|---|---|
| 6 | 0.01 | 0.05 | 2.66 | 2.87 | 16.95 | 6.87 | 8.32 | 0.008 | 0.000 | 0.04 | O | 6.66 |
| 7 | 0.01 | 0.05 | 2.57 | 2.80 | 16.87 | 6.81 | 8.26 | 0.008 | 0.000 | 0.04 | O | 6.70 |
| 8 | 0.01 | 0.05 | 2.74 | 2.81 | 16.84 | 6.83 | 8.32 | 0.008 | 0.000 | 0.04 | O | 6.81 |
| 9 | 0.01 | 0.05 | 3.10 | 2.88 | 16.87 | 6.96 | 8.21 | 0.008 | 0.000 | 0.04 | O | 7.08 |
| 10 | 0.01 | 0.05 | 3.52 | 2.82 | 17.02 | 6.82 | 8.21 | 0.008 | 0.000 | 0.04 | O | 7.20 |
| 11 | 0.01 | 0.05 | 3.92 | 2.79 | 16.98 | 7.19 | 8.15 | 0.008 | 0.000 | 0.04 | O | 7.25 |
| 12 | 0.01 | 0.05 | 2.17 | 0.00 | 17.08 | 6.80 | 8.23 | 0.008 | 0.000 | 0.04 | O | 1.50 |
| 13 | 0.01 | 0.05 | 2.17 | 0.29 | 17.01 | 6.92 | 8.26 | 0.008 | 0.000 | 0.04 | O | 2.02 |
| 14 | 0.01 | 0.05 | 2.17 | 0.85 | 16.81 | 6.87 | 8.32 | 0.008 | 0.000 | 0.04 | O | 3.03 |
| 15 | 0.01 | 0.05 | 2.17 | 1.32 | 16.85 | 6.92 | 8.26 | 0.008 | 0.000 | 0.04 | O | 3.84 |
| 16 | 0.01 | 0.05 | 2.17 | 1.79 | 17.00 | 6.87 | 8.30 | 0.008 | 0.000 | 0.04 | O | 4.65 |
| 17 | 0.01 | 0.05 | 2.17 | 2.85 | 16.90 | 6.97 | 8.33 | 0.008 | 0.000 | 0.04 | O | 6.52 |
| 18 | 0.01 | 0.05 | 2.17 | 3.11 | 16.85 | 6.94 | 8.54 | 0.008 | 0.000 | 0.04 | O | 7.02 |
| 19 | 0.01 | 0.05 | 2.17 | 3.52 | 16.88 | 6.88 | 8.29 | 0.008 | 0.000 | 0.04 | O | 7.74 |
| 20 | 0.01 | 0.05 | 2.17 | 3.81 | 16.80 | 6.90 | 8.32 | 0.008 | 0.000 | 0.04 | X | 8.27 |
| 21 | 0.01 | 0.05 | 0.56 | 0.85 | 16.81 | 6.87 | 8.32 | 0.008 | 0.010 | 0.20 | O | 2.16 |
| 22 | 0.01 | 0.05 | 0.56 | 2.51 | 16.92 | 6.82 | 8.39 | 0.008 | 0.010 | 0.40 | O | 5.09 |
| 23 | 0.01 | 0.05 | 2.57 | 2.80 | 16.87 | 6.81 | 8.26 | 0.008 | 0.010 | 0.50 | O | 6.69 |
| 24 | 0.01 | 0.05 | 2.12 | 2.87 | 16.80 | 6.85 | 8.25 | 0.008 | 0.010 | 0.60 | O | 6.59 |
| 25 | 0.01 | 0.05 | 4.20 | 4.07 | 16.82 | 6.96 | 8.35 | 0.008 | 0.010 | 0.10 | X | 9.79 |
| 26 | 0.01 | 0.05 | 2.15 | 2.71 | 23.82 | 6.90 | 8.25 | 0.008 | 0.010 | 0.10 | O | 4.86 |
| 27 | 0.01 | 0.05 | 2.17 | 2.89 | 16.92 | 10.72 | 8.23 | 0.008 | 0.010 | 0.20 | O | 5.69 |
| 28 | 0.01 | 0.05 | 2.16 | 2.79 | 15.01 | 3.07 | 8.25 | 0.008 | 0.010 | 0.10 | O | 7.03 |
| 29 | 0.01 | 0.05 | 2.52 | 3.23 | 15.94 | 3.17 | 8.26 | 0.008 | 0.010 | 0.10 | O | 9.21 |
| 30 | 0.01 | 0.05 | 2.17 | 2.85 | 16.88 | 6.89 | 13.09 | 0.008 | 0.010 | 0.10 | O | 6.75 |

Flux cored arc welding (FCAW) was performed with each welding material. In the case of FCAW, welding was performed with a heat input of 8.0 to 12.0 KJ/cm in a 100% $CO_2$ protective gas ambient. A wire having a diameter of 1.2 mm was used for the FCAW. A bevel was formed such that a bevel angle of a groove face to a 7-mm A36 steel plate was 30°, and the groove was buttered with a test wire to form a buttering layer. After that, the buttered base metals were arranged so that the root gap became 12 mm, and the padding (steel member) with the surface buttered similarly was placed on the narrower side of the groove. With this bevel, welding was performed, and a weld joint was formed.

Afterwards, considering the arc stability and slag releasability of the obtained weld joint, the multiple position welding was visually compared and evaluated, and the welding quality was classified into 4 classes: ◎ (excellent), ○ (good), △ (poor), and X (fail). In addition, the crack resistance and the bead appearance (porosity) were also visually compared and evaluated, and the quality is classified into four classes: ◎ (excellent), ○ (good), △ (poor), and X (fail). The results are shown in Table 2.

[Table 2]

|  | Crack resistance | Arc stability | Spattering inhibition | Bead appearance | Slag peeling |
|---|---|---|---|---|---|
| 1 | △ | ◎ | ◎ | ◎ | ◎ |
| 2 | △ | ◎ | ◎ | ◎ | ◎ |

(continued)

| | | Crack resistance | Arc stability | Spattering inhibition | Bead appearance | Slag peeling |
|---|---|---|---|---|---|---|
| | 3 | ○ | ◎ | ◎ | ◎ | ◎ |
| | 4 | ○ | ◎ | ◎ | ◎ | ◎ |
| | 5 | ○ | ◎ | ◎ | ◎ | ◎ |
| | 6 | ◎ | ◎ | ◎ | ◎ | O |
| | 7 | ◎ | ◎ | ◎ | ◎ | ○ |
| | 8 | ◎ | ◎ | ◎ | ◎ | ○ |
| | 9 | ◎ | ○ | ○ | ◎ | ○ |
| | 10 | ◎ | ○ | ○ | ○ | △ |
| | 11 | ◎ | △ | △ | ○ | △ |
| | 12 | ◎ | ◎ | ◎ | ◎ | ◎ |
| | 13 | ◎ | ◎ | ◎ | ◎ | ◎ |
| | 14 | ○ | ◎ | ◎ | ◎ | ○ |
| | 15 | ○ | ◎ | ◎ | ◎ | ○ |
| | 16 | ○ | ◎ | ◎ | ○ | △ |
| | 17 | △ | ◎ | ◎ | △ | △ |
| | 18 | X | ◎ | ◎ | △ | X |
| | 19 | X | ◎ | ◎ | △ | X |
| | 20 | X | ◎ | ◎ | △ | X |
| | 21 | ◎ | ◎ | ◎ | ◎ | ◎ |
| | 22 | ◎ | ◎ | ◎ | ◎ | ◎ |
| | 23 | ◎ | ◎ | ◎ | ◎ | ◎ |
| | 24 | △ | X | X | X | X |
| | 25 | X | ○ | ◎ | X | X |
| | 26 | △ | ◎ | ◎ | ◎ | ◎ |
| | 27 | X | ◎ | ◎ | ◎ | ◎ |
| | 28 | △ | ○ | ◎ | ◎ | ◎ |
| | 29 | X | ○ | ◎ | ◎ | ◎ |
| | 30 | X | ◎ | ◎ | ◎ | ◎ |

Referring to Table 2, it was confirmed that crack resistance and bead appearance were improved in the weld joint of the flux-cored wire in which the contents of Mn and Nb were in the ranges proposed by the present invention. Specifically, it was possible to determine the content ranges of manganese and niobium by which the bead appearance, slag peelability, and crack resistance could be improved.

Referring to Composition Examples 1 to 11, crack resistance and bead appearance were improved by increasing the manganese content even when the content of niobium was 2.5 wt% or more.

Referring to Composition Examples 12 to 20, it was confirmed that there is no problem in terms of crack resistance and slag peelability when the content of niobium is limited to 2.9 wt% or less even though the manganese content exceeds 2 wt%.

In addition, referring to Composition Example 24 related to Relational Expression 1, when the value of Relational Expression 1 exceeded 0.5, problems occur in terms of arc stability, bead appearance, and slag peelability as well as in crack resistance. That is, it was confirmed that the value is greater than 0.5.

On the other hand, the crack ratio according to the content of niobium was investigated. The crater crack ratio and the bead crack ratio of the beads according to Composition Examples 13 to 20 having different niobium contents are shown in Table 3 below. FIG. 1 is a photograph showing cracks of welding beads according to an exemplary composition of the present invention. In FIG. 1, (a) is a photograph of a weld bead according to Composition Example 15, (b) is a photograph of a weld bead according to Composition Example 17, (c) is a photograph of a weld bead according to Composition Example 18, and (d) is a photograph of a weld bead according to Composition Example 20.

[Table 3]

|  | Total bead length (mm) | Crater crack (mm) | Bead crack (mm) | Crater crack ratio (%) | Bead crack ratio (%) |
|---|---|---|---|---|---|
| 13 | 145 | 15 | 0 | 10 | 0 |
| 14 | 140 | 20 | 15 | 25 | 11 |
| 15 | 140 | 20 | 20 | 28 | 14 |
| 16 | 140 | 17 | 38 | 39 | 27 |
| 17 | 140 | 15 | 55 | 50 | 39 |
| 18 | 145 | 15 | 85 | 69 | 59 |
| 19 | 140 | 15 | 85 | 71 | 61 |
| 20 | 140 | 15 | 90 | 75 | 64 |

Referring to Table 3 and FIG. 1, it was possible to significantly reduce the crack ratio by controlling the content of niobium. In particular, comparing the crack ratios of Composition Example 17 and Composition Example 18, it was confirmed that the crack ratio differed by about 20% at a Nb content of 2.9 wt%, which is the upper limit of the niobium content range of the present invention.

In addition, the yield strength (YS, MPa), tensile strength (TS, MPa), elongation (E.L, %), and Charpy impact energy (J) at -196°C of the obtained weld joint were measured. The results are shown in Table 4 below.

[Table 4]

|  | Yield strength | Tensile strength | Elongation | Impact toughness |
|---|---|---|---|---|
| 1 | 441 | 750 | 37 | 52 |
| 2 | 424 | 740 | 38 | 58 |
| 3 | 440 | 747 | 38 | 60 |
| 4 | 439 | 734 | 39 | 57 |
| 5 | 437 | 744 | 38 | 65 |
| 6 | 448 | 740 | 39 | 56 |
| 7 | 435 | 729 | 38 | 52 |
| 8 | 424 | 735 | 39 | 60 |
| 9 | 407 | 687 | 42 | 65 |
| 10 | 402 | 676 | 42 | 69 |
| 11 | 419 | 666 | 41 | 60 |
| 12 | 427 | 720 | 38 | 64 |
| 13 | 429 | 731 | 38 | 60 |
| 14 | 420 | 737 | 38 | 58 |
| 15 | 423 | 740 | 38 | 55 |
| 16 | 429 | 749 | 39 | 54 |
| 17 | 433 | 752 | 38 | 54 |
| 18 | 438 | 759 | 37 | 50 |

(continued)

| | Yield strength | Tensile strength | Elongation | Impact toughness |
|---|---|---|---|---|
| 19 | 442 | 770 | 37 | 48 |
| 20 | 449 | 787 | 37 | 52 |
| 21 | 429 | 722 | 40 | 55 |
| 22 | 437 | 744 | 38 | 65 |
| 23 | 442 | 745 | 37 | 62 |
| 24 | 436 | 741 | 38 | 57 |
| 25 | 460 | 797 | 35 | 47 |
| 26 | 442 | 760 | 37 | 55 |
| 27 | 440 | 737 | 38 | 60 |
| 28 | 428 | 712 | 39 | 50 |
| 29 | 449 | 785 | 35 | 48 |
| 30 | 439 | 733 | 38 | 58 |

Referring to Table 4, it can be confirmed that, unlike the conventional Ni-based alloy flux cored wire, physical properties such as strength are maintained even though the manganese content is increased, and the niobium content is decreased. The desired strength was obtained by adding niobium although tungsten was absent. It was confirmed that the problem occurring due to a relatively low content of niobium content compared to the conventional flux-cored wire can be overcome by increasing the chromium content.

The Ni-based alloy flux-cored wire according to the present invention has excellent high-temperature cracking resistance due to the control of the contents of manganese and niobium and has satisfactory impact toughness and strength. The Ni-based alloy flux-cored wire according to the present invention can overcome the problems of conventional wires, including low crack resistance and low workability caused by Ni alloy.

The foregoing has broadly described the features and technical advantages of the present invention so that the appended claims can be better understood. The ordinarily skilled people in this art will appreciate that the present invention can be implemented in other different forms without departing from the technical spirit or essential characteristics of the exemplary embodiments. Therefore, it can be understood that the examples described above are only for illustrative purposes and are not restrictive in all aspects. The scope of the present invention is defined by the following claims rather than the above detailed description, and all changes or modifications derived from the meaning and scope of the claims and their equivalent concepts should be interpreted as falling into the scope of the present invention.

**Claims**

1. A Ni-based alloy flux-cored wire having a Ni-based alloy sheath having a flux therein, wherein a total wire composition including a sheath component and a flux component provided in the sheath comprises, with respect to the total amount of the entire flux-cored wire, 0.1 wt% (except for 0 wt%%) of C, 0.01 to 0.5 wt% of Si, 0.01 to 3.0 wt% of Mn, 15.0 to 22.0 wt% of Cr, 0 to 2.9 wt% (except for 0 wt%) of Nb, 5.0 to 10.0 wt% of Mo, 3.0 to 9.0 wt% of Fe, Ni as the balance, and unavoidable impurities,

   wherein $SiO_2$ is included in an amount of 0.5 to 3.0 wt%,
   at least one oxide of $Na_2O$, $K_2O$, MgO, and CaO is included in an amount of 0.1 to 3.0 wt%,
   at least one oxide of $Al_2O_3$, $TiO_2$, and $ZrO_2$ is included in an amount of 5.0 to 12.0 wt%, and
   the composition satisfies the following [Relational Expression 1] and {Relational Expression 2]:

   $$[Relational\ Expression\ 1]\quad 0.1$$
   $$Na_2O + \{K_2O + 0.5(MgO + Al_2O_3)\}/\{CaO + 1.6(TiO_2 + SiO_2) + 0.2(ZrO_2)\} < 0.5$$

[Relational Expression 2] 0.01 wt% Mn ≤ Nb wt% ≤ (0.01 wt% Mn)+3.3

2. The flux-cored wire of claim 1, wherein the flux component further comprises MnO in an amount of 0.1 wt% (except for 0 wt%) and a fluorine compound in an amount of 0.1 to 1.5 wt% in terms of F.

3. A Ni-based alloy flux-cored wire having an Ni-based alloy sheath filled with a flux, wherein a deposited metal obtained from the flux-cored wire has a composition comprising 0.1 wt% or less (except for 0 wt%) of C, 0.01 to 0.5 wt% of Si, 0.01 to 3.0 wt% of Mn, 15.0 to 22.0 w% of Cr, 0 to 2.9 wt% (except for 0 wt%) of Nb, 5.0 to 10.0 wt% of Mo, 3.0 to 9.0 wt% of Fe, and the balance including Ni and unavoidable impurities,
wherein the composition of the deposited metal satisfies [Relational Equation 3]: [Relational Equation 3] [Fe+{15(2.8Nb+0.85Mn)}]/(Cr+Mo) < 7.0.

[도1]

(a)

(b)

20 30 40 50 60 70 80 90 100 110 120 130 140

(c)

390 400 410 420 430 440 450 460 470 480 490 500 510 520 530 540

(d)

90 80 100 100 110 120 130 140 150 160 170 180 190 200 210 220

<div align="center">

## INTERNATIONAL SEARCH REPORT

</div>

| International application No. |
|---|
| **PCT/KR2020/016750** |

| A. | CLASSIFICATION OF SUBJECT MATTER |
|---|---|
| | **B23K 35/30**(2006.01)i; **B23K 35/02**(2006.01)i |

According to International Patent Classification (IPC) or to both national classification and IPC

| B. | FIELDS SEARCHED |
|---|---|

Minimum documentation searched (classification system followed by classification symbols)

B23K 35/30(2006.01); B23K 35/02(2006.01); B23K 35/368(2006.01); B23K 9/16(2006.01); C22C 19/05(2006.01); C22C 38/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈 합금(nickel alloy), 플럭스(flux), 와이어(wire), 용접(welding), 비드(bead), 아크(arc), 망간(manganese), 니오븀(niobium)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2019-0087846 A (HYUNDAI WELDING CO., LTD. et al.) 25 July 2019 (2019-07-25)<br>See abstract and claim 1. | 1-3 |
| A | KR 10-2018-0076088 A (HYUNDAI WELDING CO., LTD.) 05 July 2018 (2018-07-05)<br>See abstract, paragraphs [0002] and [0067] and claim 1. | 1-3 |
| A | JP 2007-203350 A (KOBE STEEL LTD.) 16 August 2007 (2007-08-16)<br>See abstract and claims 1-5. | 1-3 |
| A | US 2012-0055903 A1 (IZUTANI et al.) 08 March 2012 (2012-03-08)<br>See paragraphs [0039]-[0042] and claims 1-3. | 1-3 |
| A | JP 2010-500178 A (HUNTINGTON ALLOYS CORPORATION) 07 January 2010 (2010-01-07)<br>See paragraph [0009] and claims 1-13. | 1-3 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 February 2021** | **24 February 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2020/016750**

| Patent document cited in search report | | | Publication date (day/month/year) | Patent family member(s) | | | Publication date (day/month/year) |
|---|---|---|---|---|---|---|---|
| KR | 10-2019-0087846 | A | 25 July 2019 | KR | 10-2022448 | B1 | 04 November 2019 |
| KR | 10-2018-0076088 | A | 05 July 2018 | None | | | |
| JP | 2007-203350 | A | 16 August 2007 | JP | 4970802 | B2 | 11 July 2012 |
| | | | | KR | 10-0805494 | B1 | 20 February 2008 |
| | | | | KR | 10-2007-0079579 | A | 07 August 2007 |
| US | 2012-0055903 | A1 | 08 March 2012 | JP | 2012-055899 | A | 22 March 2012 |
| | | | | JP | 5411820 | B2 | 12 February 2014 |
| | | | | KR | 10-1289964 | B1 | 26 July 2013 |
| | | | | KR | 10-2012-0024360 | A | 14 March 2012 |
| JP | 2010-500178 | A | 07 January 2010 | CA | 2660107 | A1 | 21 February 2008 |
| | | | | CA | 2660107 | C | 12 May 2015 |
| | | | | CN | 101144130 | A | 19 March 2008 |
| | | | | CN | 101144130 | B | 05 October 2011 |
| | | | | EP | 2059620 | A2 | 20 May 2009 |
| | | | | EP | 2059620 | B1 | 16 January 2013 |
| | | | | ES | 2403027 | T3 | 13 May 2013 |
| | | | | JP | 5420406 | B2 | 19 February 2014 |
| | | | | KR | 10-1399795 | B1 | 27 May 2014 |
| | | | | KR | 10-2009-0055552 | A | 02 June 2009 |
| | | | | US | 2010-0136368 | A1 | 03 June 2010 |
| | | | | US | 8187725 | B2 | 29 May 2012 |
| | | | | WO | 2008-021650 | A2 | 21 February 2008 |
| | | | | WO | 2008-021650 | A3 | 10 April 2008 |

Form PCT/ISA/210 (patent family annex) (July 2019)

**EP 4 066 985 A1**

REFERENCES CITED IN THE DESCRIPTION

**Patent documents cited in the description**

- KR 101708997

- KR 101760828